(19) Europäisches Patentamt
European Patent Office
Office européen des brevets

(11) **EP 4 773 683 A1**

(12) **EUROPEAN PATENT APPLICATION**
published in accordance with Art. 153(4) EPC

(43) Date of publication:
**08.07.2026 Bulletin 2026/28**

(21) Application number: **24870468.6**

(22) Date of filing: **12.09.2024**

(51) International Patent Classification (IPC):
**H04W 52/02** (2009.01)

(52) Cooperative Patent Classification (CPC):
**H04W 52/02**

(86) International application number:
**PCT/CN2024/118565**

(87) International publication number:
**WO 2025/066924 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311271227**

(71) Applicant: **HUAWEI TECHNOLOGIES CO., LTD.
Shenzhen 518129 (CN)**

(72) Inventors:
• **ZHANG, Shuhang**
  **Shenzhen, Guangdong 518129 (CN)**
• **GUAN, Lei**
  **Shenzhen, Guangdong 518129 (CN)**
• **LI, Ruijie**
  **Shenzhen, Guangdong 518129 (CN)**

(74) Representative: **Isarpatent
Patent- und Rechtsanwälte Part G mbB
Friedrichstrasse 31
80801 München (DE)**

(54) **COMMUNICATION METHOD AND APPARATUS**

(57) A communication method and apparatus are provided, and relate to the field of wireless communication technologies, to achieve network energy saving. The method includes: A network device sends configuration information, where the configuration information indicates an association relationship between a resource of a wake-up signal and a terminal device identifier. The network device receives a wake-up signal on a first resource, determines a second resource based on the first resource or an identifier of a first terminal device, and sends a paging message on the second resource, where the identifier of the first terminal device is a terminal device identifier associated with the first resource.

FIG. 3

**Description**

CROSS-REFERENCE TO RELATED APPLICATIONS

This application claims priority to Chinese Patent Application No. 202311271227.5, filed with the China National Intellectual Property Administration on September 27, 2023 and entitled "COMMUNICATION METHOD AND APPARATUS", which is incorporated herein by reference in its entirety.

TECHNICAL FIELD

Embodiments of this application relate to the field of wireless communication, and in particular, to a communication method and apparatus.

BACKGROUND

With evolution of communication technologies, a spectrum used in wireless communication is increasingly wide, a quantity of transmit antennas of a network device is increasing, and power consumption is increasingly high. Therefore, how to achieve network energy saving has received increasing attention. One of main technical means for reducing energy consumption of a network device is to reduce signal transmission performed by the network device.

In a current communication system, for a cell having no service transmission requirements or low service transmission requirements, a network device disables transmission of data signals and transmission of a part of control signals in the cell, for example, disables transmission of paging messages, so that the cell enters a sleep mode. When a terminal device in the cell needs to be paged, the network device may wake up the cell, and send a paging message in the cell. Usually, there are only a few terminal devices in a sleeping cell. After the cell is woken up, a large quantity of paging resources are used to send paging messages, causing a waste of energy.

SUMMARY

Embodiments of this application provide a communication method and apparatus, to reduce resources occupied by paging messages, thereby achieving network energy saving.

According to a first aspect, a communication method is provided. The method may be applied to a network device. The method includes: The network device sends configuration information, where the configuration information indicates an association relationship between M resources of wake-up signals and N terminal device identifiers, and both M and N are positive integers; receives a wake-up signal on a first resource, where the first resource is one of the M resources; determines a second resource based on the first resource or an identifier of a first terminal device, where the identifier of the first terminal device is a terminal device identifier associated with the first resource; and sends a paging message on the second resource.

Optionally, the network device skips sending the paging message on a paging resource other than the second resource in the paging resource.

According to a second aspect, a communication method is provided. The method may be applied to a terminal device. The method may include: The terminal device receives configuration information, where the configuration information indicates an association relationship between M resources of wake-up signals and N terminal device identifiers, and both M and N are positive integers; determines a first resource based on the configuration information and an identifier of a first terminal device, where the first resource is one of the M resources, the identifier of the first terminal device is one of the N terminal identifiers, and the terminal device is in an idle state or an inactive state; and sends a wake-up signal on the first resource, where the wake-up signal is used to identify the first terminal device.

Based on the first aspect or the second aspect, the terminal device in the idle/inactive state may send the wake-up signal, so that the network device can detect the terminal device and a resource used by the terminal device to send the wake-up signal. In this way, when needing to page the terminal device, the network device may determine a corresponding paging resource based on the resource used by the terminal device to send the wake-up signal and page the terminal device on the paging resource, and may skip sending the paging message on another paging resource. Compared with related technologies in which a terminal device needs to be paged on a large number of paging resources, in the foregoing implementation, a network side can accurately detect a terminal device in an idle/inactive state, and the network device can determine a corresponding paging resource based on a resource of the wake-up signal, thereby reducing paging energy consumption overheads.

Optionally, based on the first aspect or the second aspect, sending the paging message on the second resource includes: if it is determined that strength of the wake-up signal is greater than a specified threshold, sending, on the second resource, a paging message corresponding to the first terminal device.

Based on the first aspect or the second aspect, in a possible implementation, the first resource includes a resource of the wake-up signal, the second resource includes a time domain resource of the paging message, a correspondence exists between the resource of the wake-up signal and the time domain resource of the paging message, and the resource of the wake-up signal includes at least one of a time domain resource, a frequency domain resource, a code domain resource, or a power domain resource.

Based on the first aspect or the second aspect, in a possible implementation, the first resource includes a wake-up signal transmit frame in time domain, the second resource includes a paging frame in time domain, and a correspondence exists between the transmit frame of the wake-up signal and the paging frame.

Optionally, a relationship between the transmit frame of the wake-up signal and the paging frame satisfies the following formula:

$$(\text{SFN}+\text{SFN}_{\text{offset}}) \bmod T=(T \text{ div } n)*(\text{UE}_{\text{ID}} \bmod n),$$

where

SFN is a system frame number of the transmit frame of the wake-up signal, $\text{SFN}_{\text{offset}}$ is an offset of the transmit frame of the wake-up signal, T is a length of a paging cycle, n is a multiple or a divisor of a quantity of paging frames included in the paging cycle, $\text{UE}_{\text{ID}}$ is the identifier of the first terminal device, mod is a modulo operator, and div is an integer division operator.

Based on the foregoing implementation, one wake-up signal transmit frame may correspond to one paging frame, or one wake-up signal transmit frame may correspond to a plurality of (two or more) paging frames, or a plurality of wake-up signal transmit frames may correspond to one paging frame. For example, when n = N (N is a quantity of paging frames included in the paging cycle), it indicates that the transmit frame of the wake-up signals and the paging frames are in a one-to-one correspondence. When n = k * N (k is an integer greater than 1), it indicates that k wake-up signal transmit frames correspond to one paging frame. When n = 1/k * N, it indicates that one wake-up signal transmit frame corresponds to k paging frames.

Based on the first aspect or the second aspect, in a possible implementation, the first resource includes the transmit frame of the wake-up signal in time domain, the second resource includes the paging frame in time domain, the configuration information includes a first parameter, and the first parameter indicates a quantity of paging frames corresponding to one wake-up signal transmit frame or a quantity of wake-up signal transmit frames corresponding to one paging frame.

Optionally, the configuration information includes the offset of the transmit frame of the wake-up signal.

Based on the first aspect or the second aspect, in a possible implementation, the first resource includes a transmission occasion of the wake-up signal in time domain, the second resource includes a paging occasion in time domain, and a correspondence exists between the transmission occasion of the wake-up signal and the paging occasion.

Optionally, a relationship between the transmission occasion of the wake-up signal and the paging occasion satisfies the following formula:

$$\text{URS}+\text{URS}_{\text{offset}}=\text{floor}\left(\frac{\text{UE}_{\text{ID}}}{n}\right) \bmod n_s,$$

where

URS is an index of a starting symbol of the transmission occasion of the wake-up signal, $\text{URS}_{\text{offset}}$ is an offset of the transmission occasion of the wake-up signal, n is a multiple or a divisor of a quantity of paging frames included in a paging cycle, $n_s$ is a multiple or a divisor of a quantity of paging occasions included in a paging frame, $\text{UE}_{\text{ID}}$ is the identifier of the first terminal device, mod is a modulo operator, and floor is a floor operator.

Based on the first aspect or the second aspect, in a possible implementation, the first resource includes the transmission occasion of the wake-up signal in time domain, the second resource includes the paging occasion in time domain, the configuration information includes a second parameter, and the second parameter indicates a quantity of paging occasions corresponding to one transmission occasion of the wake-up signal or a quantity of wake-up signal transmission occasions corresponding to one paging occasion.

Optionally, the configuration information includes the offset of the transmission occasion of the wake-up signal.

Based on the first aspect or the second aspect, in a possible implementation, sending the paging message on the second resource includes: if it is determined that strength of the wake-up signal is greater than a specified threshold, sending, on the second resource, a paging message corresponding to the first terminal device.

According to a third aspect, a communication apparatus is provided, including a unit or module configured to perform the method according to any one of the implementations of the first aspect, or including a unit or module configured to perform the method according to any one of the implementations of the second aspect.

According to a fourth aspect, a communication apparatus is provided, including: one or more processors configured to perform the method according to any one of the implementations of the first aspect, or perform the method according to any one of the implementations of the second aspect.

According to a fifth aspect, a computer-readable storage medium is provided. The computer-readable storage medium stores a computer program or instructions. When the computer program or the instructions are executed by a communication apparatus, the method according to any one of the implementations of the first aspect or the method according to any one of the implementations of the second aspect is implemented.

According to a sixth aspect, a chip or a chip system is provided, including: a memory, configured to store a computer program; and a processor, where after the processor invokes the computer program from the memory and runs the computer program, a communication apparatus on which the chip system is installed is enabled to perform the method according to any one of the implementations of the first aspect or the method according to any one of the implementations of the second aspect.

According to a seventh aspect, a computer program product is provided. When the computer program product is invoked by a computer, the computer is enabled to perform the method according to any one of the implementations of the first aspect or the method according to any one of the implementations of the second aspect.

BRIEF DESCRIPTION OF DRAWINGS

FIG. 1 is a diagram of an architecture of a mobile communication system to which an embodiment of this application is applied;
FIG. 2 is a diagram of a paging resource in related technologies;
FIG. 3 is a schematic flowchart of a communication method according to an embodiment of this application;
FIG. 4 is a diagram of an association relationship between a wake-up signal transmit frame and a paging frame according to an embodiment of this application;
FIG. 5 is a diagram of an association relationship between a transmission occasion of a wake-up signal and a paging occasion according to an embodiment of this application;
FIG. 6 is a diagram of a structure of a communication apparatus according to an embodiment of this application; and
FIG. 7 is a diagram of a structure of another communication apparatus according to an embodiment of this application.

DESCRIPTION OF EMBODIMENTS

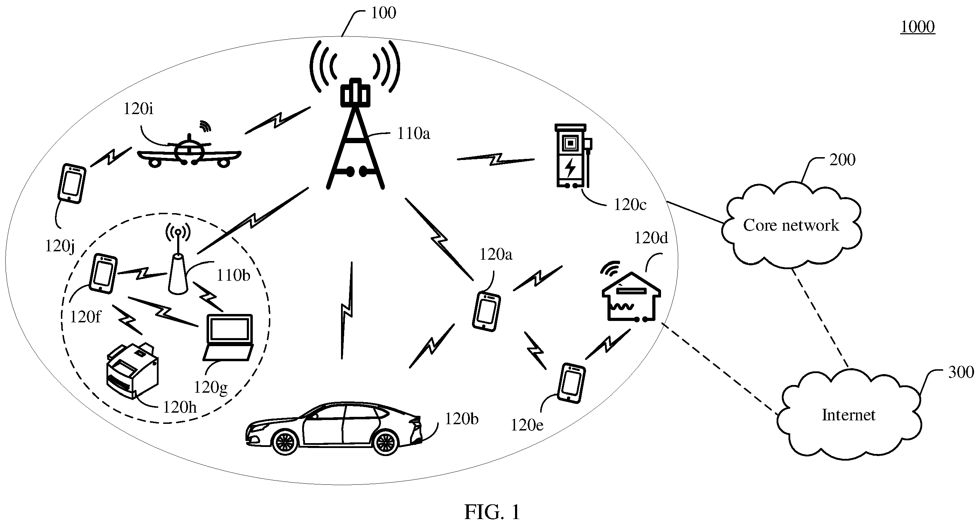

FIG. 1 is a diagram of an architecture of a communication system 1000 to which an embodiment of this application is applied. As shown in FIG. 1, the communication system includes a radio access network (radio access network, RAN) 100. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (shown in FIG. 1).

The terminal 120 is connected to the RAN 110 in a wireless manner. The terminals may be connected to each other in a wired or wireless manner and the RAN nodes may be connected to each other in a wired or wireless manner. The communication system 1000 may further include a core network 200. The RAN node 110 is connected to the core network 200 in a wireless or wired manner. A core network device in the core network 200 and the RAN node 110 in the RAN 100 may be different and separate physical devices, or may be a same physical device that integrates a logical function of the core network device and a logical function of the RAN node. The communication system 1000 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP), or may be a Wi-Fi system. The RAN 100 may further include the foregoing two or more different radio access systems. The RAN 100 may also be an open RAN (open RAN, O-RAN).

The RAN node, also referred to as a radio access network device, a RAN entity, or an access node, is configured to help a terminal access the communication system in a wireless manner. In an application scenario, the RAN node may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), may be a relay node or a donor node, or the like. In another application scenario, a plurality of RAN nodes may cooperate to help a terminal implement radio access, and different RAN nodes separately implement some functions of the base station. For example, the RAN node may be a central unit (central unit, CU), or may be a distributed unit (distributed unit, DU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to technical specifications related to a 3rd generation partnership project (3rd generation partnership project, 3GPP). An RU may be configured to implement a function of transmitting and receiving a radio frequency signal. The CU and the DU may be two independent RAN nodes, or may be integrated into a same RAN node, for example, inherited in a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may have different names. For example, in an O-RAN system, a CU may be an open CU (open CU, O-CU), a DU may be an open DU (open DU, O-DU), and an RU may be an open RU (open RU, O-RU). The RAN node in embodiments of this application may be implemented by using a software module, a hardware module, or a combination of a software module and a hardware module. For example, the RAN node may be a server loaded with a corresponding software module. Neither of a specific technology and a specific device form used for the RAN node is limited in embodiments of this application. For ease of description, the following is described by using an example in which the network device is used as a RAN node.

The terminal may also be referred to as a terminal device, user equipment (user equipment, UE), a terminal apparatus, a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. Neither of a specific technology and a specific device form used for the terminal is limited in embodiments of this application. For ease of description, the following uses a terminal as an example for description.

The base station and the terminal may be fixed or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between a base station and a terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertzes (gigahertz, GHz), or may be performed by using a spectrum above 6 GHz, or may be simultaneously performed by using the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

The technical solutions provided in embodiments of this application may be applied to wireless communication between communication devices. The wireless communication between communication devices may include wireless communication between a network device and a terminal, wireless communication between network devices, and wireless communication between terminal devices. In embodiments of this application, the term "wireless communication" may also be referred to as "communication" for short, and the term "communication" may also be described as "data transmission", "information transmission", or "transmission".

For ease of understanding this application by a person skilled in the art, the following first explains and describes some terms in embodiments of this application.

(1) Radio resource control (radio resource control, RRC) state of a terminal device In a new radio (new radio, NR) system, based on whether there is an RRC connection between a terminal device and a network device, the terminal device has three RRC states: an RRC idle state (Idle state for short below), an RRC inactive state (Inactive state for short below), and an RRC connected state (Connected state for short below). There is an RRC connection between the terminal device in the connected state and the network device, and data transmission may be performed between the terminal device and the network device. There is no RRC connection between the terminal device in the idle/inactive state and the network device, and the terminal device cannot perform data transmission with the network device, but can receive broadcast information such as a system message or a paging message of a cell. The terminal device in the idle/inactive state may switch to the connected state using a random access procedure.
(2) Paging (paging)

The network device notifies, using a broadcast message over an air interface, the terminal device in the idle/inactive state to enter an active mode (that is, enter the Connected state), or notifies, using a broadcast message over an air interface, the terminal device in the idle/inactive/connected state to update a system message. The foregoing process is referred to as paging. A frame for sending a paging message is referred to as a paging frame (paging frame, PF). A part of time-frequency resources in the paging frame are used to send a paging message, and the part of time-frequency resources are referred to as paging occasions (paging occasion, PO). Each paging occasion is assigned to one or more terminal devices. The terminal device may wait for the paging message during the assigned paging occasion.

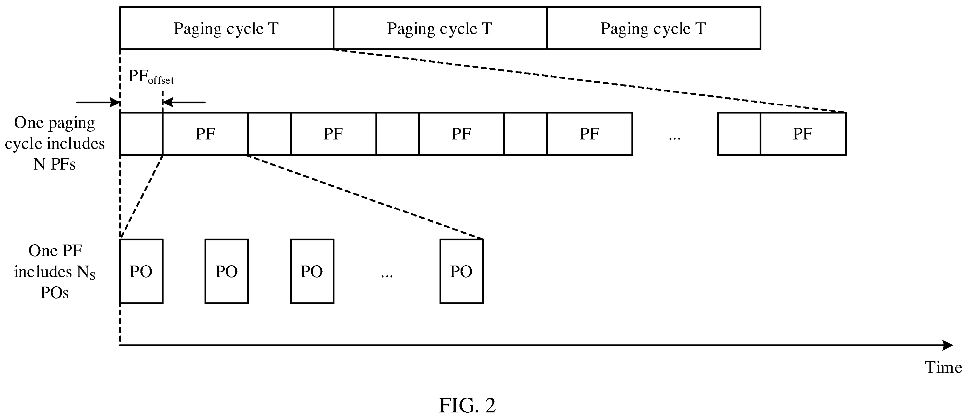

FIG. 2 is an example of a diagram of a paging resource. As shown in FIG. 1, a paging cycle whose length is T includes N (N is an integer greater than or equal to 1) paging frames (PF), and all paging information is sent in the paging frames. According to Clause 7.1 of 38.304, a system frame number (system frame number, SFN) of a paging frame satisfies the following relationship:

$$(\text{SFN}+\text{PF}_{\text{offset}}) \bmod T=(T \text{ div } N)*(\text{UE}_{\text{ID}} \bmod N)\dots\dots\dots\dots\dots\dots\dots\dots\dots\dots(1)$$

SFN is the system frame number of the paging frame. $\text{PF}_{\text{offset}}$ is a time domain offset of the paging frame. T is the length of the paging cycle. N is a quantity of paging frames included in one paging cycle. $\text{UE}_{\text{ID}}$ is a terminal device identifier. mod is a modulo operator. div is an integer division operator.

The network device may notify the terminal device of the configuration of $\text{PF}_{\text{offset}}$ and T/N using an nAndPagingFrameOffset field in a DownlinkConfigCommonSIB field (or referred to as an information field) in a system information block 1 (system information block1, SIB1). Based on $\text{PF}_{\text{offset}}$ and T/N, the terminal device may learn of a location of the paging frame corresponding to the terminal device.

As shown in FIG. 1, one paging frame (PF) includes a plurality of paging occasions (PO). The network device sends paging information of a corresponding terminal device on a PO resource. According to Clause 7.1 of 38.304, a correspondence between an $(i\_s)^{\text{th}}$ PO and the terminal device satisfies the following formula:

$$i\_s=\text{floor}\left(\frac{\text{UE}_{\text{ID}}}{N}\right) \bmod N_s\dots\dots\dots\dots\dots\dots\dots\dots\dots\dots\dots\dots\dots\dots\dots\dots\dots(2)$$

N is a quantity of paging frames included in one paging cycle. $N_s$ is a quantity of paging occasions included in one paging frame. $\text{UE}_{\text{ID}}$ is a terminal device identifier. mod is a modulo operator. floor is a floor operator.

Each paging occasion (PO) may include one or more slots. Paging information in each PO is carried on a physical downlink control channel (physical downlink control channel, PDCCH) resource. The first detection occasion of the PDCCH carrying the PO may be configured using a firstPDCCH-MonitoringOccasionOfPO field in the SIB1. The terminal device calculates a corresponding paging resource based on a device identifier of the terminal device and a paging configuration parameter provided in the SIB1, and detects and receives paging information on the paging resource.

Currently, to ensure robustness, large-scale paging needs to be performed in a region formed by a plurality of cells. The paging (paging) message occupies a large number of resources and has a heavy payload.

(3) Network energy saving technology

Embodiments of this application relate to a network energy saving technology, and the following different explanations may be provided for a scenario to which this application is applicable.

In the first manner, a network device may distinguish between a "normal mode" and one or more "energy saving modes" of a cell. In the normal mode, the network device normally sends all data and all control information in each cell. In the energy saving mode, for a cell with no data traffic or extremely light traffic loads, the network device disables transmission of data signals and transmission of a part of control signals in the cell. A terminal device in an idle/inactive state may send a wake-up signal to wake up a cell in the energy saving mode, so that the cell can send a paging message to page the terminal device in the idle/inactive state.

In the second manner, the network device does not need to distinguish between a "normal mode" and an "energy saving mode" of a cell. The network device may send a signal in each cell according to the method provided in embodiments of this application. Using a first cell as an example, in the first cell, the network device first disables transmission of data signals and transmission of a part of control signals, and implements energy saving of the network device by restricting a transmission capability. A terminal device that is in an idle/inactive state and that camps on the first cell may send a wake-up signal, so that the first cell lifts the restrictions on the transmission capability, and may send a paging message to the terminal device in the idle/inactive state.

It may be understood that the "energy saving mode" described in this application is a short term for the network device in an overhead-reducing state, or may be replaced with another name. For example, the energy saving mode may also be referred to as a first mode, a mode A, a sleep mode, or the like.

(4) Synchronization signal block (synchronization signal block, SSB)

The SSB is used for initial access of a terminal device, and is an always-on broadcast signal of a network device. The broadcast signal may be periodically sent, and is used to carry some common information that needs to be periodically sent by the network device. The common information may include a primary synchronization block (primary synchronization signal, PSS), a secondary synchronization block (secondary synchronization signal, SSS), and a physical broadcast channel (physical broadcast channel, PBCH) that are used for synchronization between the terminal device and a network. The PSS and the SSS may also be collectively referred to as a synchronization signal (synchronization signal, SS). The PBCH carries a master information block (master information block, MIB), and the MIB includes information about a cell accessed by the terminal device and a resource indication of a system information block 1 (system information block1, SIB1). The PSS and the SSS may be used to identify different physical cells.

In some embodiments of this application, to reduce power consumption of the network device, for a cell with no data traffic or extremely light traffic loads, the network device may disable transmission of data signals and transmission of a part of control signals in the cell, and transmit only the remaining part of control signals.

In a possible implementation, after transmission of a part of control signals is disabled for network energy saving, the remaining part of control signals sent in the cell may include a synchronization signal and a part of information in the MIB. Content included in the part of information in the MIB is not limited in embodiments of this application.

In another possible implementation, after transmission of a part of control signals is disabled for network energy saving, control information sent in the cell may include a part of information in the SIB1. Content included in the part of information in the SIB1 is not limited in embodiments of this application.

In a current paging procedure, large-scale paging needs to be performed in a region formed by a plurality of cells. On this premise, the network device needs to send a paging message on a large quantity of paging resources (for example, paging occasions) in a cell, and overheads are high. For a cell in an energy saving mode, when the cell is woken up, usually, only a few terminal devices are in a service range of the cell. In this case, if a paging message is sent on a large quantity of paging resources of the cell, a large amount of energy is wasted.

Based on this, embodiments of this application provide a communication method and a related apparatus that can implement the method. In embodiments of this application, a network device may determine a corresponding paging resource based on an identifier of a terminal device in an idle/inactive state or based on a wake-up signal sent by the terminal device in the idle/inactive state, to send a paging message only on the paging resource, so that a paging area that can be detected by the terminal device in the idle/inactive state is refined. Compared with sending paging messages in a plurality of cells and on a large quantity of paging resources in the cells, embodiments of this application can reduce paging resource usage, thereby achieving network energy saving. In embodiments of this application, the paging resource that is determined based on the wake-up signal sent by the terminal device in the idle/inactive state and that is used to send the paging message may be referred to as an active paging resource.

Embodiments of this application are applicable to the foregoing energy saving scenario.

To make the objectives, technical solutions, and advantages of this application clearer, the following further describes this application in detail with reference to the accompanying drawings. A specific operation method in a method embodiment may also be applied to an apparatus embodiment or a system embodiment.

Embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, and a 5th generation (5th generation, 5G) system or new radio (new radio, NR), or be applied to a future communication system, another similar communication system, or the like.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus having the function of the terminal.

In embodiments of this application, the network device sends a downlink signal or downlink information to the terminal device. The downlink information is carried on a downlink channel. The terminal device sends an uplink signal or uplink information to a base station. The uplink information is carried on an uplink channel. To communicate with the network device, the terminal device needs to establish a wireless connection to a cell controlled by the network device. The cell that establishes the wireless connection to the terminal device is referred to as a serving cell of the terminal device.

To make the objectives, technical solutions, and advantages of this application clearer, the following first describes some terms in embodiments of this application.

(1) Wake-up signal (wake-up signal, WUS)

The wake-up signal in embodiments of this application is an uplink signal, and may be an uplink reference signal or another uplink signal that can implement a same or similar function. This is not limited in embodiments of this application. The wake-up signal may wake up a cell in an energy saving mode, so that a network device can initiate paging in the cell when the network device needs to page a terminal device. In other words, the wake-up signal is used to request the network device to send paging. In embodiments of this application, the wake-up signal is sent by a terminal device in an idle/inactive state. The terminal device in the idle/inactive state may send a wake-up signal in a cell (for example, a first cell), and a resource used for the wake-up signal is referred to as a first resource. A resource of the wake-up signal is associated with a terminal device identifier. The association relationship may be indicated by configuration information. The terminal device that is in the idle/inactive state and that is in the first cell may determine, based on the configuration information sent by the network device and an identifier of the terminal device, a resource used to send a wake-up signal, and send the wake-up signal on the resource. In a network energy saving mode, the network device may wake up the first cell in the energy saving mode based on the wake-up signal sent by the terminal device that is in the idle/inactive state and that is in the first cell.

In embodiments of this application, a correspondence exists between the resource of the wake-up signal and a paging resource. The network device may determine, based on the resource used for the received wake-up signal, a paging resource corresponding to the wake-up signal, and send a paging message to the terminal device on the paging resource.

In some embodiments of this application, the wake-up signal may be a periodic signal. In other words, the terminal device may send the wake-up signal based on a specified period.

In some other embodiments of this application, the wake-up signal is an aperiodic signal. In other words, sending of the wake-up signal is triggered based on a condition. Optionally, the terminal device that is in the idle/inactive state and that is in the first cell is used as an example. The terminal device may trigger, based on a condition, sending of the wake-up signal in the following several cases:

Case 1: The terminal device sends the wake-up signal only after entering a paging area. The paging area may also be referred to as a paging region, a location area, or a tracking area. The paging area is a region in which paging is initiated on the terminal device, and may include one or more cells. The paging area can be a tracking area (tracking area), a RAN area (RAN area), or a region formed by one or more cells.

Case 2: When the terminal device receives a control instruction sent by the network device, for example, downlink control information (downlink control information, DCI), the terminal device sends the wake-up signal in response to the control instruction.

Case 3: After receiving a first downlink signal in the first cell, the terminal device sends the wake-up signal based on configuration information included in the first downlink signal. In other words, an operation of sending the wake-up signal by the terminal device is triggered based on the first downlink signal.

Case 4: The terminal device determines, based on a received first downlink signal, that the first cell is in an energy saving mode, and sends the wake-up signal in the first cell. For example, the first downlink signal may include indication information indicating whether the first cell is in the energy saving mode, and the terminal device may determine, based on the indication information, whether the first cell is in the energy saving mode. For another example, a resource of the first downlink signal may be associated with a mode type of the first cell. For example, a time-frequency resource used to send the first downlink signal when the first cell is in a normal mode is different from that when the first cell is in the energy saving mode, so that whether the first cell is in the normal mode or the energy saving mode is implicitly indicated in this manner. Correspondingly, the terminal device may determine, based on the resource of the first downlink signal, whether the first cell is in the energy saving mode.

It may be understood that a name form and a function of the wake-up signal are not specifically limited in this application. For example, the wake-up signal may also be referred to as an uplink reference signal.

(2) First downlink signal

In embodiments of this application, the network device may send a first downlink signal. The first downlink signal may carry configuration information. The configuration information indicates an association relationship between a resource of a wake-up signal and a terminal identifier, and/or indicates an association relationship between a resource of a wake-up signal and a paging resource.

In some embodiments of this application, the first downlink signal carrying the configuration information may be an SIB1, another system information block (represented as SIBs), a master information block (MIB), a DCI, always-on control information in the network energy saving mode, or the like. This is not limited in embodiments of this application. For example, when an emergency public event occurs, the network device may deliver the configuration information to the terminal device by sending a DCI, to trigger the terminal device to send a wake-up signal based on the configuration information to wake up a cell, so that the network device pages the terminal device.

Optionally, the always-on control information in the network energy saving mode may be used for initial access of the terminal device. Optionally, the always-on control information in the network energy saving mode may include one or more of the following information: an MIB or a part of information in the MIB, an SIB1 or a part of information in the SIB1, and may further include a synchronization signal (SS). Optionally, the always-on control information in the network energy saving mode may be periodically broadcast and sent.

It may be understood that a name form and a function of the "first downlink signal" are not specifically limited in embodiments of this application. For example, the first downlink signal may also be understood as a first downlink reference signal.

(3) Second downlink signal

In embodiments of this application, the second downlink signal is control information sent by the network device in a cell in a normal mode, or control information sent in a cell after the cell is woken up from an energy saving mode. The terminal device may perform initial access based on the second downlink signal.

Optionally, the second downlink signal may include an SSB, and may further include an SIB1 or another system information block. This is not limited in embodiments of this application.

(4) Resource

The "resource" in embodiments of this application may be one or more of a time domain resource, a frequency domain resource, a code domain resource, and a power domain resource. For example, the resource of the wake-up signal may include one or more of a wake-up signal time domain resource, a wake-up signal frequency domain resource, a wake-up signal code domain resource, a wake-up signal power, and the like. In a possible manner, the code domain resource may be a sequence.

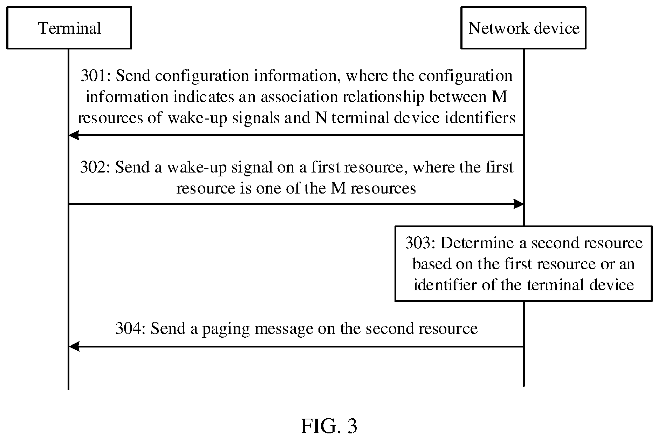

The following describes a communication method provided in embodiments of this application with reference to FIG. 3. Based on the architecture of a network system shown in FIG. 2 and the content described in the foregoing related technologies, FIG. 3 is an example of a schematic flowchart of a communication method according to an embodiment of this application. A solution in FIG. 3 is described by using an example in which a network device and a terminal device interact with each other.

Unless otherwise specified, a terminal in the following description refers to a terminal in an idle/inactive state. In the following description, to distinguish from another terminal, in some descriptions, the terminal shown in FIG. 3 is referred to as a first terminal. That is, the first terminal is a terminal that is in the idle/inactive state and that is in the first cell. The first terminal may send a wake-up signal on a first resource in the first cell, and receive a paging message on a second resource in the first cell.

As shown in FIG. 3, the communication method may include the following steps.

Step 301: The network device sends configuration information, where the configuration information indicates an association relationship between M resources of wake-up signals and N terminal identifiers, and both M and N are positive integers.

In a possible implementation, the association relationship that is between the M resources of wake-up signals and the N terminal identifiers and that is indicated by the configuration information may include the following several cases.

Case 1: Any one of the M resources of wake-up signals is associated with a plurality of terminal identifiers. For example, one wake-up signal transmit frame is associated with a plurality of terminal identifiers, so that the plurality of terminals may send the wake-up signal in a same wake-up signal transmit frame.

Case 2: Any one of the M resources of wake-up signals is associated with one terminal identifier.

Case 3: A plurality of resources of the M resources of wake-up signals are associated with one terminal identifier. For example, a plurality of wake-up signal transmit frames are associated with one terminal identifier, so that one terminal can send the wake-up signal in the plurality of wake-up signal transmit frames.

It may be understood that at least two cases of the foregoing Case 1, Case 2, and Case 3 may exist at the same time. For example, the M resources of wake-up signals include M1 resources and M2 resources (M1 and M2 are both positive integers). Each of the M1 resources is associated with a plurality of terminal identifiers. Each of the M2 resources is associated with one terminal identifier.

Optionally, the association relationship between a resource of a wake-up signal and a terminal identifier may include the following several cases.

Case a: A wake-up signal code domain resource (for example, sequence) is associated with a terminal identifier. That is, different terminals may be associated using different wake-up signal code domains.

Case b: A wake-up signal time domain resource is associated with a terminal identifier. That is, different terminals may be associated using different wake-up signal time domains.

Case c: A wake-up signal frequency domain resource is associated with a terminal identifier. That is, different terminals may be associated using different wake-up signal frequency domains. For example, a wake-up signal sequence is associated with a terminal identifier. Different sequences may be associated with different terminal identifiers.

It may be understood that at least two cases of the foregoing Case a, Case b, and Case c may be combined. For example, the wake-up signal time domain resource and the wake-up signal code domain resource are both associated with the terminal identifier.

It may be understood that the foregoing enumerated association manners between a wake-up signal resource and a terminal identifier are merely several possible examples. This is not limited in embodiments of this application. Any association relationship between a wake-up signal resource and a terminal identifier falls within the scope of protection of this application.

In a possible implementation, the association relationship between a wake-up signal resource and a paging resource may be configured in the configuration information. For a specific configuration parameter included in the configuration information, refer to the following description in step 303. In another possible implementation, a correspondence between a wake-up signal resource and a terminal identifier may be configured in the configuration information, so that the network device can determine a corresponding terminal identifier based on a resource of a received wake-up signal and the correspondence, and then determine a paging resource based on the terminal identifier and the correspondence between a terminal identifier and a paging resource.

In a possible implementation, the configuration information is at a cell level. For example, the configuration information includes first configuration information, the first configuration information indicates a first resource, and the first resource is a resource used to send a wake-up signal in the first cell. That is, the configuration information indicates only a resource used to send a wake-up signal in a cell. It may be understood that the configuration information not only includes the first configuration information, but also may include more configuration information such as second configuration information. That is, the configuration information includes N pieces of configuration information (N is a positive integer). The N pieces of configuration information indicate N different resources used to send a wake-up signal in a same cell. Each resource may be associated with one or more terminal identifiers.

For another example, the configuration information includes first configuration information and second configuration information. The first configuration information indicates a first resource. The first resource is a resource used to send a wake-up signal in the first cell. The second configuration information indicates a second resource. The second resource is a resource used to send a wake-up signal in a second cell. In other words, the configuration information may include a plurality of pieces of configuration information that are used to separately indicate resources used to send wake-up signals in a plurality of cells. Resources used to send wake-up signals in different cells may be the same or may be different. It may be understood that the first configuration information may include N1 pieces of configuration information (N1 is a positive integer). The N1 pieces of configuration information indicate N1 different resources used to send a wake-up signal in a first cell. Each resource may be associated with one or more terminal identifiers. The second configuration information may include N2 pieces of configuration information (N2 is a positive integer). The N2 pieces of configuration information indicate N2 different resources used to send a wake-up signal in a first cell. Each resource may be associated with one or more terminal identifiers. Optionally, N1 + N2 = N, and N is a quantity of pieces of configuration information included in the configuration information.

In a possible implementation, the configuration information is at a cell group level. For example, the configuration information includes first configuration information, the first configuration information indicates a first resource, and the first resource is a resource used to send a wake-up signal in a cell in a first cell group. That is, the configuration information may indicate a resource used to send a wake-up signal in a cell group (including the first cell), and configuration information of a resource used to send a wake-up signal in each cell in the cell group is the same. For example, each cell in the cell group has the same wake-up signal sending period, wake-up signal time domain offset, and wake-up signal frequency domain offset. Wake-up signal resources of the plurality of cells may share one piece of configuration information. Based on the configuration information, the terminal may send a wake-up signal in the plurality of cells. Using an example in which the first cell and the second cell are cells in a cell group, it may be understood that the configuration information may include N pieces of configuration information (N is a positive integer), indicating N wake-up signal resources shared by the first cell and the second cell, and each resource may be associated with one or more terminal identifiers.

In a possible implementation, the terminal receives the configuration information after entering a paging area (which may be a tracking area, a RAN area, or a region including one or more other cells). Next, the terminal may determine a resource of the wake-up signal based on the configuration information and the identifier of the terminal, and send a wake-up signal on the resource. For a specific implementation, refer to the following.

In a possible implementation, the configuration information may be carried in a first downlink signal. For content included in the first downlink signal and a sending manner, refer to the foregoing related descriptions.

Step 302: The terminal sends a wake-up signal on a first resource, where the first resource is one of the M resources of wake-up signals. The terminal is one of terminals corresponding to the N terminal identifiers, and the terminal is in an idle state or an inactive state.

In this step, a first terminal is used as an example. The first terminal may determine the first resource based on the received configuration information and an identifier of the first terminal, and then send the wake-up signal on the first resource. Because the configuration information indicates the association relationship between the M resources of wake-up signals and the N terminal identifiers, the first terminal may determine, based on the terminal identifier of the first terminal and the association relationship, a wake-up signal resource (referred to as the first resource herein) of the M resources that is associated with the terminal, and send the wake-up signal on the first resource.

In a possible implementation, if the configuration information received by the first terminal indicates resources used to send wake-up signals in the plurality of cells and indicates that resources used to send wake-up signals in different cells are different, the first terminal may send wake-up signals in the plurality of cells based on the configuration information.

In a possible implementation, the wake-up signal is periodically sent. In another possible implementation, sending of the wake-up signal is triggered based on a condition. For a specific implementation, refer to the foregoing related content.

In a possible implementation, an example in which a wake-up signal is sent in the first cell is used. After receiving the wake-up signal in the first cell, the network device may wake up the first cell in an energy saving mode to enable the first cell to enter a normal mode, or in other words, lift restrictions on a transmission capability of the first cell. Next, the network device may send a second downlink signal in the first cell, and when paging needs to be initiated to the terminal, determine, according to the method provided in embodiments of this application, an active paging resource corresponding to the terminal, and send a paging message on the active paging resource. For a specific implementation, refer to the following descriptions.

Optionally, to further achieve network energy saving, the network device may send, based on a wake-up signal beam, the second downlink signal on a corresponding beam, to partially wake up the cell.

Step 303: The network device determines a second resource based on the first resource or an identifier of the terminal, where the second resource is used to send a paging message, or the second resource is a paging resource.

The first terminal is a terminal to be paged, and the second resource may be referred to as an active paging resource corresponding to the first terminal. Optionally, the network device determines the active paging resource corresponding to the first terminal only when determining that paging needs to be initiated to the first terminal.

In a possible implementation, a correspondence exists between a wake-up signal resource and a paging resource. For example, because a terminal identifier is associated with a paging frame and a paging occasion in related technologies, a transmit frame and a transmission occasion of a wake-up signal are associated with a terminal identifier, so that the transmit frame of the wake-up signal can be associated with a paging frame, and the transmission occasion of the wake-up signal can be associated with a paging occasion. Correspondingly, for a wake-up signal received by the network device, a correspondence exists between a first resource used for the wake-up signal and a second resource used to page a corresponding terminal (that is, a terminal corresponding to a terminal identifier associated with the first resource, where the identifier of the first terminal is included). The network device may determine, based on the first resource and the foregoing correspondence (that is, a correspondence between a wake-up signal resource and a paging resource), the second resource corresponding to the first resource, and may initiate paging to the terminal (that is, a terminal corresponding to a terminal identifier associated with the first resource) by sending a paging message on the second resource.

In embodiments of this application, the correspondence between a wake-up signal resource and a paging resource may include one or more of the following.

- Correspondence between a wake-up signal time domain resource and a paging message time domain resource. For example, a correspondence exists between a transmit frame of a wake-up signal and a paging frame, and further, a correspondence exists between a transmission occasion of a wake-up signal and a paging occasion.

For example, the configuration information may include a plurality of candidate wake-up signal time domain configurations. Each of the candidate wake-up signal time domain configurations indicates a corresponding wake-up signal time domain resource. Different candidate time domain configurations are distinguished using indices. An index of a candidate time domain configuration is associated with a paging message time domain resource.

-Correspondence between a wake-up signal frequency domain resource and a paging message time domain resource. For example, a correspondence exists between a frequency band in which a wake-up signal is located and a paging frame, and further, a correspondence exists between a subcarrier in which a wake-up signal is located and a paging occasion.

For example, similar to a correspondence between a wake-up signal time domain resource and a paging message time domain resource, the configuration information may include a plurality of candidate wake-up signal frequency domain configurations. Each of the candidate wake-up signal frequency domain configurations indicates a corresponding wake-up signal frequency domain resource. Different candidate frequency domain configurations are distinguished using indices. An index of a candidate frequency domain configuration is associated with a paging frame, or is associated with a paging frame and a paging occasion.

-Correspondence between a wake-up signal code domain resource and a paging message time domain resource. For example, a correspondence exists between a wake-up signal root sequence and/or zero correlation field and a paging frame. Further, a correspondence exists between the wake-up signal root sequence and/or zero correlation field and the paging occasion.

For example, similar to a correspondence between a wake-up signal time domain resource and a paging message time domain resource, the configuration information may include a plurality of candidate wake-up signal code domain configurations. Each of the candidate wake-up signal code domain configurations indicates a corresponding wake-up signal code domain resource. Different candidate code domain configurations are distinguished using indices. An index of a candidate code domain configuration is associated with a paging frame, or is associated with a paging frame and a paging occasion.

- Correspondence between a wake-up signal power domain resource and a paging message time domain resource.

It may be understood that the correspondence between a wake-up signal resource and a paging resource may alternatively be that a correspondence exists between a paging message time domain resource and at least two of the wake-up signal time domain resource, frequency domain resource, code domain resource, and power domain resource.

It may be understood that the foregoing enumerated association manners between a wake-up signal resource and a paging resource are merely several possible examples. This is not limited in embodiments of this application. Any association relationship between a wake-up signal resource and a paging resource (for example, including a paging frame, or including a paging frame and a paging occasion) falls within the scope of protection of this application.

Because a correspondence may exist between a wake-up signal transmit frame and a paging frame, correspondingly, the network device may determine a paging frame based on a wake-up signal transmit frame.

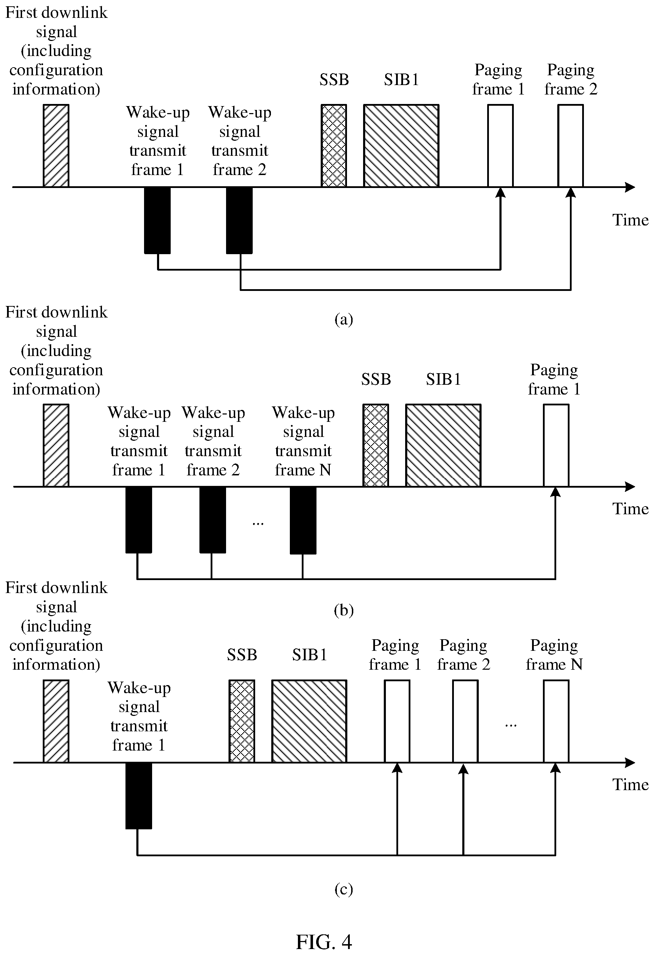

FIG. 4 shows an example of several possible correspondences between a wake-up signal transmit frame and a paging frame.

As shown in (a) in FIG. 4, one wake-up signal transmit frame corresponds to one paging frame, that is, a one-to-one correspondence exists between a wake-up signal transmit frame and a paging frame. Based on the one-to-one correspondence, paging resource usage can be reduced. For example, a wake-up signal transmit frame 1 is associated with the identifier of the first terminal. When needing to page the first terminal, the network device only needs to send a paging message of the terminal on a paging frame 1 associated with the transmit frame 1 of the wake-up signal. Because a one-to-one correspondence exists between a wake-up signal transmit frame and a paging frame, the network device may page a target terminal using a small number of paging resources, thereby achieving network energy saving. In addition, in this implementation, a paging range may be further refined, and a quantity of cells for paging the terminal is reduced.

As shown in (b) in FIG. 4, a plurality of wake-up signal transmit frames correspond to one paging frame, that is, a many-to-one correspondence exists between a wake-up signal transmit frame and a paging frame. Based on the many-to-one relationship, paging resource overheads can be minimized. For example, a wake-up signal transmit frame 1 is associated with the identifier of the first terminal, and a wake-up signal transmit frame 2 is associated with an identifier of a second terminal. When needing to page the first terminal and the second terminal, the network device only needs to send paging messages of the first terminal and the second terminal on a paging frame 1 that is jointly associated with the transmit frame 1 of the wake-up signal and the transmit frame 2 of the wake-up signal. Because the transmit frame of the wake-up signal and the paging frame are in a many-to-one relationship, when paging a plurality of terminals, the network device can minimize paging resource usage.

As shown in (c) in FIG. 4, one wake-up signal transmit frame corresponds to a plurality of paging frames, that is, a one-to-many correspondence exists between a wake-up signal transmit frame and a paging frame. Based on the one-to-many correspondence, compared with the foregoing one-to-one correspondence or many-to-one correspondence, paging performance can be improved. For example, a wake-up signal transmit frame 1 is associated with the identifier of the first terminal. When needing to page the first terminal, the network device may send a paging message of the terminal on N paging frames associated with the transmit frame 1 of the wake-up signal. Therefore, paging performance for a target terminal can be improved. In addition, in this case, the transmit frame 1 of the wake-up signal may be associated with a plurality of terminal identifiers. In this way, a quantity of pieces of configuration information can be reduced, thereby reducing resource overheads.

Based on the foregoing correspondence between a wake-up signal transmit frame and a paging frame shown in FIG. 4, for all terminals associated with a same wake-up signal transmit frame, the network device may page these terminals on one or more paging frames corresponding to the transmit frame of the wake-up signal, or for all terminals on a same paging frame, these terminals may be associated with one or more wake-up signal transmit frames.

In a possible implementation, a relationship between the transmit frame of the wake-up signal and the paging frame satisfies the following formula:

$$(SFN+SFN_{offset}) \bmod T = (T \operatorname{div} n)*(UE_{ID} \bmod n) \dots\dots\dots\dots\dots\dots\dots\dots\dots(3)$$

SFN is a system frame number of the transmit frame of the wake-up signal. $SFN_{offset}$ is an offset of the transmit frame of the wake-up signal. T is a length of a paging cycle. n is a multiple or a divisor of a quantity of paging frames included in the paging cycle. $UE_{ID}$ is the identifier of the terminal. mod is a modulo operator. div is an integer division operator.

Based on the foregoing Formula 3, the parameter n may indicate a quantity of paging frames associated with one wake-up signal transmit frame, or a quantity of wake-up signal transmit frames associated with one paging frame. For example, when n is a multiple of N, n is denoted as k*N (k is a positive integer), and k wake-up signal transmit frames are associated with one paging frame; or when n is a divisor of N, n is denoted as 1/k*N (k is a positive integer), and one wake-up signal transmit frame is associated with k paging frames.

For example, when n = N (N is a quantity of paging frames included in a paging cycle), that is, when n is both a minimum multiple of N and a maximum divisor of N (that is, N itself), it indicates that a one-to-one correspondence exists between a wake-up signal transmit frame and a paging frame. When n is a multiple of N (that is, n is greater than or equal to twice N), it indicates that a many-to-one correspondence exists between a wake-up signal transmit frame and a paging frame. For example, when n = 4N (that is, n is equal to four times N), four wake-up signal transmit frames correspond to a same paging frame. When n is a divisor of N, it indicates that a one-to-many correspondence exists between a wake-up signal transmit frame and a paging frame. For example, when n = 1/4N (that is, n is equal to one fourth of N), one wake-up signal transmit frame corresponds to four paging frames.

It may be understood that the correspondence between a wake-up signal transmit frame and a paging frame shown in the foregoing Formula 3 is merely a possible example. This is not limited in embodiments of this application.

In a possible implementation, the configuration information may include a first parameter, and the first parameter indicates a quantity of paging frames corresponding to one wake-up signal transmit frame or a quantity of wake-up signal transmit frames corresponding to one paging frame. For example, when the correspondence shown in the foregoing Formula 3 is met between a wake-up signal transmit frame and a paging frame, the configuration information sent by the network device may include the parameter n in the formula 3. Optionally, the configuration information may further include an offset (for example, $SFN_{offset}$ in Formula 3) of a wake-up signal transmit frame. Optionally, the configuration information may further include a length T of a paging cycle and/or a quantity N of paging frames included in the paging cycle. Correspondingly, in step 302, the terminal may determine a wake-up signal transmit frame based on the identifier of the terminal and the foregoing parameters included in the configuration information and based on the foregoing Formula 3.

Because a correspondence may exist between a transmission occasion of a wake-up signal and a paging occasion, correspondingly, the network device may determine a paging occasion based on a wake-up signal transmission occasion.

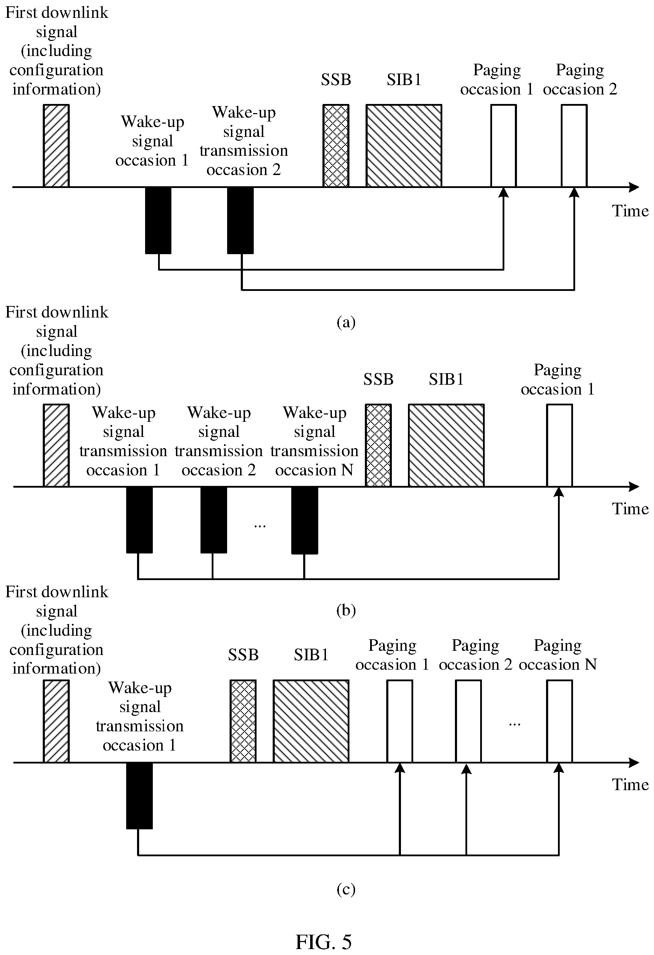

FIG. 5 shows an example of several possible correspondences between a transmission occasion of a wake-up signal and a paging occasion.

As shown in (a) in FIG. 5, one wake-up signal transmission occasion corresponds to one paging occasion. That is, a one-to-one correspondence exists between a transmission occasion of a wake-up signal and a paging occasion. The technical effect achieved in the case of the one-to-one correspondence is similar to that achieved when a wake-up signal transmit frame and a paging frame are in a one-to-one relationship.

As shown in (b) in FIG. 5, a plurality of wake-up signal transmission occasions correspond to one paging occasion. In other words, a many-to-one correspondence exists between a transmission occasion of a wake-up signal and a paging occasion. The technical effect achieved in the case of the many-to-one correspondence is similar to that achieved when a wake-up signal transmit frame and a paging frame are in a many-to-one relationship.

As shown in (c) in FIG. 5, a plurality of wake-up signal transmission occasions correspond to one paging occasion. That is, a one-to-many correspondence exists between a transmission occasion of a wake-up signal and a paging occasion. The technical effect achieved in the case of the one-to-many correspondence is similar to that achieved when a wake-up signal transmit frame and a paging frame are in a one-to-many relationship.

Based on the foregoing correspondence between a transmission occasion of a wake-up signal and a paging occasion shown in FIG. 5, for terminals associated with a same wake-up signal transmission occasion, the network device may page these terminals on one or more paging occasions corresponding to the transmission occasion of the wake-up signal, or for all terminals on a same paging occasion, these terminals may be associated with one or more wake-up signal transmission occasions.

In a possible implementation, a relationship between the transmission occasion of the wake-up signal and the paging occasion satisfies the following formula:

$$\text{URS}+\text{URS}_{\text{offset}}=\text{floor}\left(\frac{\text{UE}_{\text{ID}}}{n}\right) \bmod n_s \dots\dots\dots\dots\dots\dots\dots\dots\dots\dots\dots\dots(4)$$

URS is an index of a starting symbol of the transmission occasion of the wake-up signal. $\text{URS}_{\text{offset}}$ is an offset of the transmission occasion of the wake-up signal. n is a multiple or a divisor of a quantity of paging frames included in a paging cycle. $n_s$ is a multiple or a divisor of a quantity of paging occasions included in a paging frame. $\text{UE}_{\text{ID}}$ is the identifier of the terminal. mod is a modulo operator. floor is a floor operator.

Based on the foregoing Formula 4, the parameter $n_s$ may indicate a quantity of paging occasions associated with one wake-up signal transmission occasion, or a quantity of wake-up signal transmission occasions associated with one paging occasion. For example, when $n_s$ is a multiple of $N_s$, $n_s$ is denoted as $k*N_s$ (k is a positive integer), and k wake-up signal transmission occasions are associated with one paging frame; or when $n_s$ is a divisor of $N_s$, n is denoted as $1/k*N_s$ (k is a positive integer), and one wake-up signal transmission occasion is associated with k paging occasions.

For example, when $n_s = N_s$ ($N_s$ is a quantity of paging occasions included in a paging cycle), it indicates that a one-to-one correspondence exists between a transmission occasion of a wake-up signal and a paging occasion. When $n_s$ is a multiple of $N_s$, it indicates that a many-to-one correspondence exists between the transmission occasion of the wake-up signal and the paging occasion. When $n_s$ is a divisor of $N_s$, it indicates that a one-to-many correspondence exists between the transmission occasion of the wake-up signal and the paging occasion.

It may be understood that the correspondence between a transmission occasion of a wake-up signal and a paging occasion shown in the foregoing Formula 4 is merely a possible example. This is not limited in embodiments of this application.

In a possible implementation, the configuration information may include a second parameter, and the second parameter indicates a quantity of paging occasions corresponding to one transmission occasion of the wake-up signal or a quantity of wake-up signal transmission occasions corresponding to one paging occasion. For example, when the correspondence shown in the foregoing Formula 4 is met between a transmission occasion of a wake-up signal and a paging occasion, the configuration information sent by the network device may include the parameter $n_s$ in the formula 4. Optionally, the configuration information may further include an offset (for example, $\text{URS}_{\text{offset}}$ in Formula 4) of a wake-up signal transmission occasion. Optionally, the configuration information may further include a length T of a paging cycle and/or a quantity $N_s$ of paging occasions included in the paging cycle. Correspondingly, in step 302, the terminal may determine a wake-up signal transmission occasion based on the identifier of the terminal and the foregoing parameters included in the configuration information and based on the foregoing Formula 4.

It may be understood that, in some embodiments, a correspondence between a time domain resource in the first resource and a time domain resource in the second resource may include a correspondence between a wake-up signal transmit frame and a paging frame, and may further include a correspondence between a transmission occasion of a wake-up signal and a paging occasion.

As described above, the network device may also determine the second resource based on the terminal identifier. Because a correspondence exists between a wake-up signal resource and a paging resource, there is an association relationship between a wake-up signal resource and a terminal identifier, and a correspondence exists between a wake-up signal resource and a paging resource. Therefore, there is also a correspondence between a paging resource and a terminal identifier. Therefore, the network device may determine, based on a terminal identifier, a paging resource (referred to as the second resource in embodiments of this application) corresponding to the terminal identifier. A specific implementation principle is the same as that in the foregoing embodiment.

For example, because an association relationship exists between a wake-up signal resource and a terminal identifier, the network device may determine, based on a first resource used for a received wake-up signal, a terminal identifier associated with the first resource (the first resource may be associated with one or more terminal identifiers, represented as UE_IDs, including the identifier of the first terminal). When the network device needs to page a terminal corresponding to one or more terminal identifiers in the UE_IDs, for example, a terminal to be paged is the first terminal, the network device determines a corresponding paging resource based on the identifier of the first terminal, and sends a paging message for the first terminal on the paging resource. In embodiments of this application, a method for determining a corresponding paging resource by the network device based on the identifier of the first terminal is not limited. For example, in a possible implementation, similar to the association relationship between a wake-up signal resource and a terminal identifier, an association relationship also exists between a paging resource and a terminal identifier. In this way, the network device may determine, based on the identifier of the first terminal, a paging resource associated with the identifier of the first terminal. In another possible implementation, the network device may determine a paging frame based on the identifier of the first terminal and the foregoing Formula 1. The paging frame corresponds to a wake-up signal transmit frame. Further, the network device may further determine a paging occasion based on the identifier of the first terminal and Formula 2. The paging occasion corresponds to a wake-up signal transmission occasion.

Step 304: The network device sends a paging message on the second resource.

In this step, the second resource is a part of paging resources that are in all paging resources and that correspond to the first resource. The network device activates only the part of paging resources, sends a paging message on the part of paging resources, and skips sending the paging message on another paging resource, so that network energy saving can be implemented. With the first cell used as an example, in an energy saving mode, only a few terminals in an idle/inactive state usually exist in the first cell. If a paging method provided in related technologies is used, although only a few terminals in the idle/inactive state are paged, because the network device cannot detect paging areas of the terminals in the idle/inactive state more precisely, the terminals need to be paged in an entire paging area. In this case, a large number of paging resources in the first cell are used, and paging resources of other cells may also need to be used. However, according to the method provided in embodiments of this application, the network device may receive, in the first cell, a wake-up signal sent by the terminal in the idle/inactive state. Because the first resource used for the wake-up signal is associated with one or more terminals, the network device may detect the terminal in the idle/inactive state in the first cell. When needing to page these terminals, the network device may send a paging message only in the first cell or a few neighboring cells. Compared with the foregoing related technologies, a paging range is reduced. Further, in embodiments of this application, because a correspondence exists between a wake-up signal resource and a paging resource, the network device may determine a corresponding paging resource (the second resource) based on the first resource used for the wake-up signal, and send the paging message on the paging resource to further reduce paging resource usage, thereby achieving network energy saving.

In a possible implementation, if determining that strength (for example, a reference signal received strength (reference signal received power, RSRP)) of the wake-up signal received on the first resource is greater than a specified threshold, the network device sends the paging message on the second resource. Because the terminal may be located at an edge of a cell, for the terminal, signal strength of a wake-up signal received by the network device is weak. In this case, if the network device sends a paging message to the terminal, there is a high probability that paging may fail. In the foregoing implementation, occurrence of paging failures can be reduced, and invalid paging can be reduced, thereby achieving network energy saving. Further, in a cell, the network device may also receive a wake-up signal sent by a terminal in a neighboring cell of the cell, and signal strength of the wake-up signal is usually weak. In the foregoing implementation, initiation of paging on the terminal can be avoided, thereby reducing power consumption of the network device.

In a possible implementation, after receiving, on the first resource in the first cell, the wake-up signal sent by the terminal, the network device sends, only on the second resource in the first cell, the paging message corresponding to the terminal.

In another possible implementation, in addition to the first cell, the network device may send the paging message in one or more neighboring cells of the first cell, and a resource used for the paging message in the cells corresponds to the first resource. In this way, the robustness of network paging can be improved. For example, in the foregoing step 302, based on the wake-up signal resources of the plurality of cells indicated by the configuration information, the terminal may send wake-up signals in the plurality of cells, or notify a neighboring cell through the first cell to wake up the plurality of cells, so that the network device can perform paging in the plurality of cells, thereby improving paging robustness. In addition, although the configuration information may be used to configure resources for sending wake-up signals in the plurality of cells, a quantity of the plurality of cells is usually less than a quantity of cells included in the paging area. Further, although the terminal may send wake-up signals on the wake-up signal resources of the plurality of cells based on the configuration information, for the network device, signal strength of wake-up signals received in some cells may be weak, and therefore the network device does not initiate paging to the terminal in these cells. In other words, compared with related technologies in which paging needs to be initiated on a large number of paging resources, in embodiments of this application, paging resource usage can be reduced, thereby achieving network energy saving.

In a possible implementation, the network device may receive a paging message from a core network. For a target terminal of the paging message, if the paging resource used for the paging message from the core network is an active paging resource corresponding to the target terminal, the network device sends the paging message. If the paging resource is not an active paging resource corresponding to the target terminal, the network device may skip sending the paging message. The active paging resource corresponding to the target terminal is a paging resource corresponding to a resource used by the target terminal to send the wake-up signal.

In a possible implementation, the paging message may include one or more of the paging messages shown in Table 1.

Table 1: Paging message

| Paging purpose | Terminal state |
| --- | --- |
| Send a paging request | A terminal in an idle state, and a terminal in an inactive state |
| Notify a terminal that a system message will change. | A terminal in an idle state, a terminal in an inactive state, and a terminal in a connected state |
| Notify a terminal to get ready to receive an earthquake and tsunami warning system (earthquake and tsunami warning system, ETWS) primary (primary) notification and/or an ETWS secondary (secondary) notification | A terminal in an idle state, a terminal in an inactive state, and a terminal in a connected state |
| Notify UE to get ready to receive a commercial mobile alert system (commercial mobile alert system, CMAS) notification | A terminal in an idle state, a terminal in an inactive state, and a terminal in a connected state |

Optionally, a paging message of another function may be sent in a manner defined in a current protocol, for example, a paging message is sent on all paging resources, to implement flexible design based on robustness requirements of different services.

After the network device sends the paging message on the second resource, correspondingly, the terminal may receive the paging message on the second resource. In embodiments of this application, the first terminal is used as an example. For the first terminal, the first terminal may determine a corresponding paging resource based on the identifier of the first terminal, and listen to a paging message on the paging resource. A method for determining a corresponding paging resource by the first terminal based on the identifier of the first terminal is similar to a method for determining a corresponding paging resource (the second resource) by the network device based on the identifier of the first terminal.

Based on the foregoing procedure shown in FIG. 3, the terminal in the idle/inactive state may send the wake-up signal, so that the network device can detect the terminal and a resource used by the terminal to send the wake-up signal. In this way, when needing to page the terminal, the network device may determine a corresponding paging resource based on the resource used by the terminal to send the wake-up signal and page the terminal on the paging resource, and may skip sending the paging message on another paging resource. Compared with related technologies in which the terminal needs to be paged on a large number of paging resources, in embodiments of this application, a network side can accurately detect a terminal in an idle/inactive state, and the network device can determine a corresponding paging resource based on a resource of the wake-up signal, thereby reducing paging energy consumption overheads.

It may be understood that, to implement the functions in the foregoing embodiments, the network device and the terminal include corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

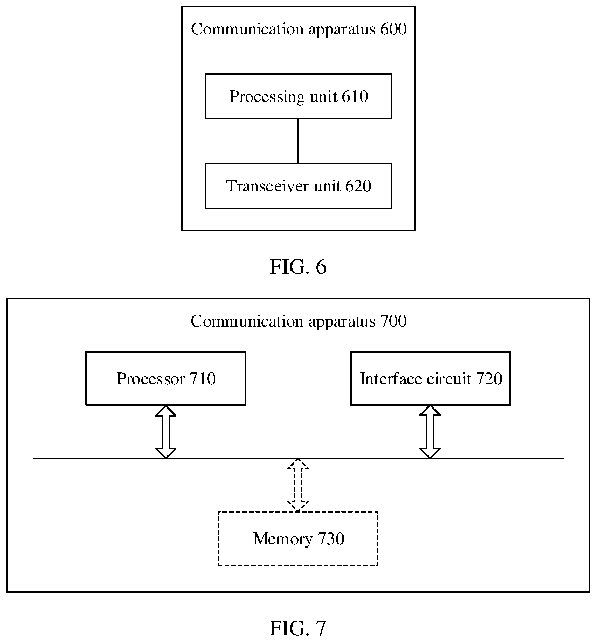

FIG. 6 and FIG. 7 are diagrams of structures of possible communication apparatuses according to embodiments of this application. These communication apparatuses may be configured to implement functions of the terminal or the network device in the foregoing method embodiments, and therefore can also implement beneficial effect of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 6, a communication apparatus 600 includes a processing unit 610 and a transceiver unit 620. The communication apparatus 600 is configured to implement a function of the terminal or the network device in the method embodiment shown in FIG. 3.

When the communication apparatus 600 is configured to implement the function of the network device in the method embodiment shown in FIG. 3: the processing unit 610 is configured to send configuration information using the transceiver unit 620, where the configuration information indicates an association relationship between M resources of wake-up signals and N terminal identifiers, and both M and N are positive integers; the transceiver unit 620 is configured to receive a wake-up signal on a first resource, where the first resource is one of the M resources; and the processing unit 610 determines a second resource based on the first resource or an identifier of a first terminal, where the identifier of the first terminal is a terminal identifier associated with the first resource; and sends a paging message on the second resource using the transceiver unit 620.

When the communication apparatus 600 is configured to implement the function of the terminal in the method embodiment shown in FIG. 3: the transceiver unit 620 receives configuration information, where the configuration information indicates an association relationship between M resources of wake-up signals and N terminal identifiers, and both M and N are positive integers; and the processing unit 610 is configured to determine a first resource based on the configuration information and an identifier of a terminal, where the first resource is one of the M resources, the identifier of the terminal is one of the N terminal identifiers, and the terminal is in an idle state or an inactive state; and sends a wake-up signal on the first resource using the transceiver unit 620, where the wake-up signal is used to identify the terminal.

For more detailed descriptions of the processing unit 610 and the transceiver unit 620, directly refer to the related descriptions in the method embodiment shown in FIG. 3. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, input data required by the processor 710 to run instructions, or data generated after the processor 710 runs instructions.

When the communication apparatus 700 is configured to implement the method shown in FIG. 3, the processor 710 is configured to implement a function of the processing unit 610, and the interface circuit 720 is configured to implement a function of the transceiver unit 620.

When the communication apparatus is a chip used in a terminal, the chip in the terminal implements functions of the terminal in the method embodiments. The chip in the terminal receives information from another module (for example, a radio frequency module or an antenna) in the terminal, where the information is sent by a network device to the terminal. Alternatively, the chip in the terminal sends information to another module (for example, the radio frequency module or the antenna) in the terminal, where the information is sent by the terminal to the network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal to the network device; or the module in the network device sends information to another module (for example, a radio frequency module or an antenna) in the network device, where the information is sent by the network device to a terminal. The module in the network device may be a baseband chip of the network device, or may be a DU or another module. The DU may be a DU in an open radio access network (open radio access network, O-RAN) architecture.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

This application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiments. For example, the communication apparatus includes one processor and one memory. As shown in FIG. 7, the communication apparatus 700 includes one processor 710 and one memory 730. The processor 710 is coupled to the memory 730. The memory 730 stores instructions. When the instructions stored in the memory 730 are executed by the processor 710, the communication apparatus 700 performs the method performed by the terminal or the network device in the foregoing embodiment.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. Alternatively, the processor and the storage medium may exist in a network device or a terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In this application, at least one means one or more, and a plurality of means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

**Claims**

1. A communication method, comprising:

   sending configuration information, wherein the configuration information indicates an association relationship between M resources of wake-up signals and N terminal device identifiers, and both M and N are positive integers;
   receiving a wake-up signal on a first resource, wherein the first resource is one of the M resources;
   determining a second resource based on the first resource or an identifier of a first terminal device, wherein the identifier of the first terminal device is a terminal device identifier associated with the first resource; and
   sending a paging message on the second resource.

2. The method according to claim 1, wherein the first resource comprises a resource of the wake-up signal, the second resource comprises a time domain resource of the paging message, a correspondence exists between the resource of the wake-up signal and the time domain resource of the paging message, and the resource of the wake-up signal comprises at least one of a time domain resource, a frequency domain resource, a code domain resource, or a power domain resource.

3. The method according to claim 1 or 2, wherein the first resource comprises a transmit frame of the wake-up signal in time domain, the second resource comprises a paging frame in time domain, and a relationship between the transmit frame of the wake-up signal and the paging frame satisfies the following formula:

$$(SFN+SFN_{offset}) \bmod T=(T \text{ div } n)*(UE_{ID} \bmod n),$$

wherein SFN is a system frame number of the transmit frame of the wake-up signal, $SFN_{offset}$ is an offset of the transmit frame of the wake-up signal, T is a length of a paging cycle, n is a multiple or a divisor of a quantity of paging frames comprised in the paging cycle, $UE_{ID}$ is the identifier of the first terminal device, mod is a modulo operator, and div is an integer division operator.

4. The method according to any one of claims 1 to 3, wherein the first resource comprises the transmit frame of the wake-up signal in time domain, the second resource comprises the paging frame in time domain, the configuration information comprises a first parameter, and the first parameter indicates a quantity of paging frames corresponding to one transmit frame of the wake-up signal or a quantity of wake-up signal transmit frames corresponding to one paging frame.

5. The method according to claim 1 or 2, wherein the first resource comprises a transmission occasion of the wake-up signal in time domain, the second resource comprises a paging occasion in time domain, and a relationship between the transmission occasion of the wake-up signal and the paging occasion satisfies the following formula:

$$URS+URS_{offset}=floor \left(\frac{UE_{ID}}{n}\right) \bmod n_s,$$

wherein
URS is an index of a starting symbol of the transmission occasion of the wake-up signal, $URS_{offset}$ is an offset of the transmission occasion of the wake-up signal, n is a multiple or a divisor of a quantity of paging frames comprised in a paging cycle, $n_s$ is a multiple or a divisor of a quantity of paging occasions comprised in a paging frame, $UE_{ID}$ is the identifier of the first terminal device, mod is a modulo operator, and floor is a floor operator.

6. The method according to any one of claims 1, 2, and 5, wherein the first resource comprises the transmission occasion of the wake-up signal in time domain, the second resource comprises the paging occasion in time domain, the configuration information comprises a second parameter, and the second parameter indicates a quantity of paging occasions corresponding to one transmission occasion of the wake-up signal or a quantity of wake-up signal transmission occasions corresponding to one paging occasion.

7. The method according to any one of claims 1 to 6, wherein sending the paging message on the second resource comprises:
if it is determined that strength of the wake-up signal is greater than a specified threshold, sending, on the second resource, a paging message corresponding to the first terminal device.

8. A communication method, comprising:

receiving configuration information, wherein the configuration information indicates an association relationship between M resources of wake-up signals and N terminal device identifiers, and both M and N are positive integers;
determining a first resource based on the configuration information and an identifier of a first terminal device, wherein the first resource is one of the M resources, the identifier of the first terminal device is one of the N terminal identifiers, and the terminal device is in an idle state or an inactive state; and
sending a wake-up signal on the first resource, wherein the wake-up signal is used to identify the first terminal device.

9. The method according to claim 8, the method further comprises:

determining a second resource based on the first resource or the identifier of the first terminal device; and
receiving a paging message on the second resource.

10. The method according to claim 9, wherein the first resource comprises a resource of the wake-up signal, the second resource comprises a time domain resource of the paging message, a correspondence exists between the resource of the wake-up signal and the time domain resource of the paging message, and the resource of the wake-up signal comprises at least one of a time domain resource, a frequency domain resource, a code domain resource, or a power domain resource.

11. The method according to claim 9 or 10, wherein the first resource comprises a transmit frame of the wake-up signal in time domain, the second resource comprises a paging frame in time domain, and a relationship between the transmit frame of the wake-up signal and the paging frame satisfies the following formula:

$$(\text{SFN}+\text{SFN}_{\text{offset}}) \bmod \text{T}=(\text{T div n})*(\text{UE}_{\text{ID}}\bmod \text{n}),$$

wherein

SFN is a system frame number of the transmit frame of the wake-up signal, $\text{SFN}_{\text{offset}}$ is an offset of the transmit frame of the wake-up signal, T is a length of a paging cycle, n is a multiple or a divisor of a quantity of paging frames comprised in the paging cycle, $\text{UE}_{\text{ID}}$ is the identifier of the first terminal device, mod is a modulo operator, and div is an integer division operator.

12. The method according to any one of claims 9 to 11, wherein the first resource comprises the transmit frame of the wake-up signal in time domain, the second resource comprises the paging frame in time domain, the configuration information comprises a first parameter, and the first parameter indicates a quantity of paging frames corresponding to one transmit frame of the wake-up signal or a quantity of wake-up signal transmit frames corresponding to one paging frame.

13. The method according to claim 9 or 10, wherein the first resource comprises a transmission occasion of the wake-up signal in time domain, the second resource comprises a paging occasion in time domain, and a relationship between the transmission occasion of the wake-up signal and the paging occasion satisfies the following formula:

$$\text{URS}+\text{URS}_{\text{offset}}=\text{floor}\left(\frac{\text{UE}_{\text{ID}}}{n}\right) \bmod n_s,$$

wherein

URS is an index of a starting symbol of the transmission occasion of the wake-up signal, $\text{URS}_{\text{offset}}$ is an offset of the transmission occasion of the wake-up signal, n is a multiple or a divisor of a quantity of paging frames comprised in a paging cycle, $n_s$ is a multiple or a divisor of a quantity of paging occasions comprised in a paging frame, $\text{UE}_{\text{ID}}$ is the identifier of the first terminal device, mod is a modulo operator, and floor is a floor operator.

14. The method according to any one of claims 9, 10, and 13, wherein the first resource comprises the transmission occasion of the wake-up signal in time domain, the second resource comprises the paging occasion in time domain, the configuration information comprises a second parameter, and the second parameter indicates a quantity of paging occasions corresponding to one transmission occasion of the wake-up signal or a quantity of wake-up signal transmission occasions corresponding to one paging occasion.

15. A communication apparatus, comprising a unit or module configured to perform the method according to any one of claims 1 to 7, or comprising a unit or module configured to perform the method according to any one of claims 8 to 14.

16. A communication apparatus, comprising one or more processors configured to perform the method according to any one of claims 1 to 7 or perform the method according to any one of claims 8 to 14.

17. A computer-readable storage medium, wherein the computer-readable storage medium stores a computer program or instructions, and when the computer program or the instructions are executed by a communication apparatus, the method according to any one of claims 1 to 7 or the method according to any one of claims 8 to 14 is implemented.

18. A computer program product, wherein when the computer program product is invoked by a computer, the computer is enabled to perform the method according to any one of claims 1 to 7 or perform the method according to any one of claims 8 to 14.

**19.** A chip system, comprising: a memory, configured to store a computer program; and a processor, wherein after the processor invokes the computer program from the memory and runs the computer program, a communication apparatus on which the chip system is installed is enabled to perform the method according to any one of claims 1 to 7 or perform the method according to any one of claims 8 to 14.

FIG. 1

EP 4 773 683 A1

| Paging cycle T | Paging cycle T | Paging cycle T |
|---|---|---|

$PF_{offset}$

One paging cycle includes N PFs

| | PF | | PF | | PF | | PF | ... | | PF |
|---|---|---|---|---|---|---|---|---|---|---|

One PF includes $N_S$ POs

| PO | | PO | | PO | ... | | PO |
|---|---|---|---|---|---|---|---|

Time

FIG. 2

Terminal

Network device

301: Send configuration information, where the configuration information indicates an association relationship between M resources of wake-up signals and N terminal device identifiers

302: Send a wake-up signal on a first resource, where the first resource is one of the M resources

303: Determine a second resource based on the first resource or an identifier of the terminal device

304: Send a paging message on the second resource

FIG. 3

First downlink
signal
(including
configuration
information)

SSB    SIB1    Paging    Paging
frame 1    frame 2

Wake-up    Wake-up
signal    signal
transmit    transmit
frame 1    frame 2

Time

(a)

First downlink
signal
(including
configuration
information)

SSB    SIB1    Paging
frame 1

Wake-up    Wake-up    Wake-up
signal    signal    signal
transmit    transmit    transmit
frame 1    frame 2    frame N

...

Time

First downlink
signal
(including
configuration
information)

(b)

SSB    SIB1    Paging    Paging    Paging
frame 1    frame 2    frame N

Wake-up
signal
transmit
frame 1

...

Time

(c)

FIG. 4

FIG. 5

Communication apparatus 600

Processing unit 610

Transceiver unit 620

FIG. 6

Communication apparatus 700

Processor 710

Interface circuit 720

Memory 730

FIG. 7

**EP 4 773 683 A1**

## INTERNATIONAL SEARCH REPORT

| International application No. |
|---|
| **PCT/CN2024/118565** |

| A. | CLASSIFICATION OF SUBJECT MATTER |
|---|---|

H04W 52/02(2009.01)i

According to International Patent Classification (IPC) or to both national classification and IPC

| B. | FIELDS SEARCHED |
|---|---|

Minimum documentation searched (classification system followed by classification symbols)

IPC: H04W, H04L, H04B, H04Q 7/-

Documentation searched other than minimum documentation to the extent that such documents are included in the fields searched

Electronic data base consulted during the international search (name of data base and, where practicable, search terms used)

CNABS, CNTXT, CNKI, VEN, WOTXT, USTXT, EPTXT, 3GPP: 小区, 网络设备, 上行, 休眠, 睡眠, 节能, 唤醒, 激活, cell, network equipment, uplink, dormant, sleep, energy saving, wake-up, waking up, awakening, activate, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 116744467 A (HUAWEI TECHNOLOGIES CO., LTD.) 12 September 2023 (2023-09-12) description, paragraphs [0082]-[0116], and figure 2 | 1-19 |
| A | CN 115379534 A (HUAWEI TECHNOLOGIES CO., LTD.) 22 November 2022 (2022-11-22) entire document | 1-19 |
| A | CN 116684947 A (CHINA UNITED NETWORK COMMUNICATIONS GROUP CO., LTD.) 01 September 2023 (2023-09-01) entire document | 1-19 |
| A | WO 2022242551 A1 (HUAWEI TECHNOLOGIES CO., LTD.) 24 November 2022 (2022-11-24) entire document | 1-19 |
| A | WO 2023030124 A1 (HUAWEI TECHNOLOGIES CO., LTD.) 09 March 2023 (2023-03-09) entire document | 1-19 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2024** | **06 December 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

28

**INTERNATIONAL SEARCH REPORT**
**Information on patent family members**

International application No.

**PCT/CN2024/118565**

| Patent document cited in search report | | | Publication date (day/month/year) | Patent family member(s) | | | Publication date (day/month/year) |
|---|---|---|---|---|---|---|---|
| CN | 116744467 | A | 12 September 2023 | None | | | |
| CN | 115379534 | A | 22 November 2022 | None | | | |
| CN | 116684947 | A | 01 September 2023 | None | | | |
| WO | 2022242551 | A1 | 24 November 2022 | US | 2024089857 | A1 | 14 March 2024 |
| | | | | EP | 4354967 | A1 | 17 April 2024 |
| WO | 2023030124 | A1 | 09 March 2023 | US | 2024205829 | A1 | 20 June 2024 |
| | | | | EP | 4383835 | A1 | 12 June 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311271227